Europäisches Patentamt

European Patent Office

Office européen des brevets

(19)

(11) Numéro de publication : **0 165 864**
**B1**

(12) **FASCICULE DE BREVET EUROPÉEN**

(45) Date de publication du fascicule du brevet :
27.07.88

(21) Numéro de dépôt : **85401177.2**

(22) Date de dépôt : **13.06.85**

(51) Int. Cl.⁴ : **H 02 H   7/08**, H 02 H   3/02

(54) **Circuit de protection d'un moteur électrique à vitesse variable.**

(30) Priorité : **22.06.84 FR 8409877**

(43) Date de publication de la demande :
**27.12.85 Bulletin 85/52**

(45) Mention de la délivrance du brevet :
**27.07.88 Bulletin 88/30**

(84) Etats contractants désignés :
**AT BE CH DE FR GB IT LI LU NL SE**

(56) Documents cités :
**DE-A- 3 119 794**
**GB-A- 1 311 950**
**US-A- 4 242 713**

(73) Titulaire : **CIAPEM**
**137, rue de Gerland**
**F-69007 - Lyon (FR)**

(72) Inventeur : **Delhomme, Bernard**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

## Description

L'invention est relative à un circuit de protection d'un moteur électrique, tel qu'un moteur d'entraînement du tambour d'un lave-linge, dont la vitesse peut varier grâce à une alimentation à commande par angle de phase.

On sait qu'un lave-linge comporte habituellement un tambour tournant, destiné à contenir le linge, qui est entraîné en rotation par un moteur électrique. La vitesse de rotation du tambour est variable ; elle est de l'ordre de 50 tours par minute lors du lavage ou du rinçage et de plusieurs centaines de tours par minute lors de l'essorage. En outre la vitesse d'essorage est souvent variable. C'est pourquoi on choisit souvent pour entraîner le tambour un moteur dont la vitesse peut varier suivant une large gamme en faisant varier sa puissance d'alimentation.

A cet effet, on utilise couramment un moteur « universel » pouvant être alimenté soit en courant alternatif, soit en courant continu. Un tel moteur, qui est bien connu, a habituellement la structure d'un moteur à courant continu à excitation série.

Pour faire varier la vitesse de ce moteur on prévoit une commande par angle de phase, c'est-à-dire qu'on dispose en série avec ce moteur un interrupteur commandé, tel qu'un triac, qui est fermé pendant une fraction de chaque période d'un signal de fréquence déterminée, ce signal étant le plus souvent le courant alternatif du réseau d'alimentation. Cette fraction de période est fonction de la vitesse de rotation désirée pour le moteur et donc pour le tambour. Même pour les vitesses d'essorage les plus élevées cette fraction n'atteint pas l'unité, c'est-à-dire que l'interrupteur commandé n'est pas constamment fermé car s'il en était ainsi, le moteur tournerait à des vitesses prohibitives, dangereuses pour la machine et pour l'utilisateur. Il faut donc éviter que cet interrupteur commandé, en série avec le moteur, soit en court-circuit permanent. C'est pourquoi on prévoit dans certains lave-linge connus un relais en série avec le moteur et l'interrupteur commandé ; ce relais est commandé par un circuit de détection de court-circuits de l'interrupteur de l'alimentation à découpage de façon à provoquer une ouverture de son contact, et donc une interruption de l'alimentation du moteur, dès qu'un court-circuit permanent du triac a été détecté.

Mais un tel relais en série est onéreux notamment parce qu'il doit être dimensionné pour laisser passer en permanence le courant qui traverse le moteur.

De plus il n'est pas possible de prévoir un simple fusible à la place du relais car lorsque l'interrupteur commandé de la commande par angle de phase est en court-circuit, le courant traversant le moteur a une intensité trop peu différente de celle admissible, c'est-à-dire qu'un tel fusible risquerait d'ouvrir le circuit de façon indésirée.

On a déjà proposé (DE-A-31 19 794) de combiner l'utilisation d'un tel fusible avec l'utilisation d'un second interrupteur commandé qui est rendu conducteur lorsqu'a été détecté un court-circuit permanent du premier interrupteur et qui est monté de façon à détruire le fusible dans ce cas. Mais avec la disposition décrite dans ledit DE-A-31 19 794, il subsiste encore des risques importants d'ouverture indésirée du circuit.

L'invention remédie à cet inconvénient.

Le circuit de protection selon l'invention comprend, de façon connue par DE-A-31 19 794, un fusible pour interrompre l'alimentation du moteur en cas de court-circuit permanent d'un interrupteur commandé et un second interrupteur commandé, tel qu'un triac ou un thyristor, qui est rendu conducteur lorsqu'a été détecté un court-circuit permanent du premier interrupteur et est monté de façon à détruire le fusible dans ce cas. Selon l'invention, ce circuit est caractérisé en ce qu'il est agencé de façon que le temps séparant la mise en conduction du second interrupteur commandé de l'instant de destruction du fusible soit suffisamment important pour éviter que de brefs déclenchements du second interrupteur commandé ne détruisent ce fusible. Ledit temps est de préférence d'au moins 100 millisecondes, par exemple de l'ordre de 0,2 seconde.

Dans une réalisation le fusible est du type à destruction lente, au moins 100 millisecondes, alors que dans DE-A-31 19 794 cité ci-dessus il est fait appel à un fusible dont le temps de destruction est court, compris entre 1 et 5 millisecondes. De plus cette réalisation, comme les autres qui vont être décrites, est particulièrement simple ; elle ne nécessite pas de moyens électroniques de temporisation dans le circuit de commande du moyen de court-circuit faisant partie du circuit de protection.

Selon une autre disposition, qui peut être utilisée en même temps que la précédente (fusible à destruction lente) ou indépendamment, on prévoit, en série avec le second interrupteur, une résistance à coefficient de température négatif pour retarder la destruction du fusible en série avec le moteur en cas de court-circuit de l'interrupteur de la commande par angle de phase. Dans ce cas le court-circuit de protection peut être effectué soit aux bornes du rotor, soit aux bornes du stator, soit aux bornes du moteur en entier.

De préférence, l'interrupteur du circuit de protection est en parallèle soit sur le stator soit sur le rotor de façon que, lorsqu'il est conducteur, le rotor (ou le stator) reste dans le circuit et limite le courant traversant le fusible, ce qui contribue à retarder la destruction du fusible lors d'un court-circuit temporaire mais bref, de durée inférieure à celle de la destruction du fusible (avec ce courant), de l'interrupteur de la commande par angle de phase.

Le circuit de détection de court-circuit permanent aux bornes de l'interrupteur de la commande par angle de phase comporte, dans un exemple, un moyen pour mesurer la tension efficace aux bornes de cet interrupteur ; un court-circuit correspond à une tension efficace nulle. Dans un autre exemple, on prévoit une génératrice tachymétrique entraînée par le moteur ou le tambour pour mesurer la vitesse de rotation et un moyen pour comparer la vitesse mesurée à une vitesse de consigne imposée par un régulateur ; dans ce cas, l'interrupteur du circuit de protection sera fermé quand la différence entre la vitesse mesurée et la vitesse de consigne dépassera une limite prédéterminée.

L'interrupteur commandé du circuit de protection n'est pas conducteur dans les conditions normales. Il n'est donc pas parcouru par un courant. Il n'est ainsi pas nécessaire de le dimensionner pour supporter en permanence le courant traversant le moteur. Il peut être réalisé à très bon marché en particulier sans radiateur de dissipation de chaleur. Il est vrai qu'en cas d'incident il est traversé par un courant d'intensité importante ; mais cet état ne dure qu'un temps bref, celui que met le fusible pour fondre.

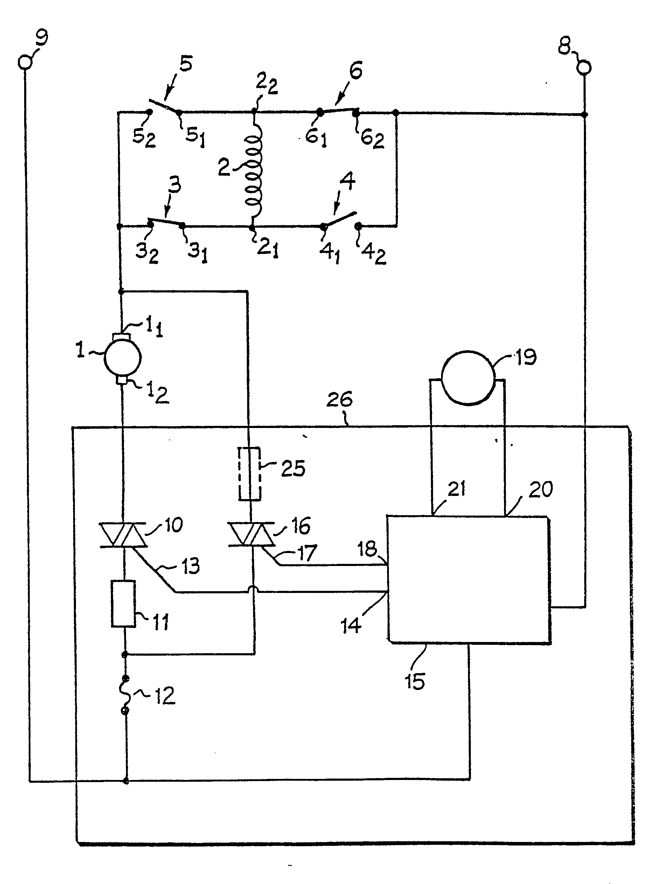

D'autres caractéristiques et avantages de l'invention apparaîtront avec la description de certains de ses modes de réalisation, celle-ci étant effectuée en se référant à la figure unique qui représente un moteur universel et son circuit de protection conforme à l'invention.

Le moteur universel comporte un rotor 1 en série avec l'enroulement statorique 2. Pour que ce moteur puisse tourner dans les deux sens la première borne $2_1$ du stator est reliée aux premières bornes respectivement $3_1$ et $4_1$ d'interrupteurs 3 et 4, la seconde borne $2_2$ de ce stator 2 est connectée également aux premières bornes, respectivement $5_1$ et $6_1$ d'interrupteurs 5 et 6. Les secondes bornes $3_2$ et $5_2$ des interrupteurs 3 et 5 sont reliées entre elles. De même les secondes bornes $4_2$ et $6_2$ des interrupteurs 4 et 6 sont connectées entre elles.

Les bornes $4_2$ et $6_2$ sont reliées à la première borne 8 du réseau d'alimentation en énergie électrique (habituellement de 220 volts). Les bornes $3_2$ et $5_2$ sont reliées à la première borne $1_1$ du rotor. Les interrupteurs 3 et 6 sont couplés de façon qu'ils soient toujours dans la même position. Les interrupteurs 4 et 5 sont couplés entre eux de la même manière.

La borne $1_2$ du rotor 1, qui est opposée à celle connectée aux bornes $3_2$ et $5_2$ est reliée à la seconde borne 9 du réseau par l'intermédiaire d'un triac 10, d'une résistance 11 de contrôle pour limitation de courant et d'un fusible 12 en série à destruction lente, d'au moins 100 millisecondes, par exemple de l'ordre de 0,2 secondes.

La gâchette 13 du triac 10 est connectée à la sortie 14 d'un circuit de commande 15 fournissant un signal de commande de la vitesse de rotation du moteur.

Le signal fourni sur la sortie 14 est tel qu'à chaque alternance du réseau le triac 10 est conducteur pendant un temps qui est fonction de la vitesse désirée. Ce temps est d'autant plus important que la vitesse désirée est grande.

Entre la borne $1_1$ du rotor 1 et la borne commune à la résistance 11 et au fusible 12 est disposé un second triac 16 dont la gâchette 17 est connectée à une autre sortie 18 du circuit 15.

Le rotor du moteur universel entraîne une génératrice tachymétrique 19 délivrant, sur les entrées 20 et 21 du circuit 15, un signal représentant la vitesse de rotation du moteur.

Le circuit 15 comporte un circuit délivrant un signal représentant la vitesse désirée (de consigne) pour le moteur. Ce signal de vitesse de consigne est soustrait du signal de vitesse mesurée. La différence est comparée à une valeur limite. Si la limite n'est pas atteinte le triac 16 reste ouvert. Si la limite est atteinte ou dépassée le triac 16 est rendu conducteur et ainsi le rotor 1 est en court-circuit et le moteur s'arrête de tourner.

Cette situation intervient lorsque le triac 10 est en court-circuit, ce qui provoque l'emballement du moteur et l'écart important mesuré entre la vitesse réelle et la vitesse de consigne.

En variante, la détection de court-circuits du triac 10, afin de commander la conduction du triac 16, est effectuée par mesure de la tension efficace aux bornes dudit triac 10. Un court-circuit est détecté lorsque cette tension efficace est nulle.

Quand le triac 16 est conducteur le courant passant dans le fusible 12 est important et celui-ci fond au bout de 0,2 seconde environ. Le courant traversant ce fusible 12 est limité par le fait que le stator 2 n'est pas court-circuité. Le temps de 0,2 seconde est suffisamment important pour qu'un déclenchement intempestif du triac 16, dû par exemple à un parasite ou un court-circuit instantané du triac 10 (également provoqué par un parasite transitoire), ne détruise pas le fusible 12.

Dans les conditions normales, en l'absence d'incident, le triac 16 n'est pas conducteur. Il n'est sollicité qu'en cas d'incident. Dans ces conditions ce triac 16 peut être de dimensions beaucoup moins importantes que le triac 10 ; en particulier, il n'a pas besoin de radiateur de dissipation de chaleur.

En variante, à la place d'un triac 16 on fait appel à un thyristor ou à tout autre type d'interrupteur commandé à état solide, ou même à un relais.

Pour augmenter le temps de destruction du fusible 12 on peut prévoir une résistance à coefficient de température négatif (CTN) 25, représentée en trait interrompu sur la figure, en série avec le triac 16. Au début de la conduction du triac 16 la résistance CTN 25 est froide et sa valeur est donc élevée. Il en résulte que le courant dans le fusible 12 est limité. Le courant circulant dans la résistance 25 échauffe cette dernière et sa valeur diminue rapidement. La destruction du fusible 12 est donc retardée par le temps d'échauffement de la résistance 25.

Avec cette dernière disposition il n'est pas nécessaire, pour obtenir un temps suffisamment important de destruction du fusible 12, que le court-circuit soit effectué seulement aux bornes du rotor 1 ou aux bornes du stator 2. On peut, lorsqu'on prévoit une telle résistance 25, disposer le triac 16 aux bornes de l'ensemble du rotor et du stator. Dans ce cas ledit triac 16 et le fusible 12 sont traversés par un courant plus important, mais limité par la résistance 25.

Le fusible 12 est soit un fusible classique, soit une piste d'un circuit imprimé, par exemple celui de référence 26 qui comporte le circuit 15, les triacs 10 et 16 et la résistance 11.

## Revendications

1. Circuit de protection d'un moteur électrique (1, 2) en série avec l'interrupteur commandé (10) d'une commande par angle de phase comprenant : un fusible (12) pour interrompre l'alimentation du moteur en cas de court-circuit permanent de l'interrupteur commandé, et un second interrupteur commandé (16), tel qu'un triac ou un thyristor, qui est rendu conducteur lorsqu'a été détecté un court-circuit permanent du premier interrupteur (10) et est monté de façon à détruire le fusible dans ce cas, caractérisé en ce que le circuit est agencé de façon que le temps séparant la mise en conduction du second interrupteur commandé (16) de l'instant de destruction du fusible (12) soit suffisamment important pour éviter que de brefs déclenchements du second interrupteur commandé ne détruisent ledit fusible (12).

2. Circuit de protection selon la revendication 1, caractérisé en ce que ledit temps est d'au moins 0,1 seconde, par exemple de l'ordre de 0,2 seconde.

3. Circuit de protection selon la revendication 1 ou 2, caractérisé en ce que le fusible (12) est du type à destruction lente.

4. Circuit de protection selon l'une des revendications 1 à 3, caractérisé en ce que le second interrupteur commandé (16) est en parallèle sur le rotor (1) ou le stator (2), l'autre enroulement étant en série avec cet ensemble en parallèle afin de limiter le courant traversant le fusible (12).

5. Circuit de protection selon l'une quelconque des revendications précédentes, caractérisé en ce qu'une résistance (25) à coefficient de température négatif CTN est en série avec le second interrupteur commandé (16).

6. Circuit de protection selon l'une quelconque des revendications 1 à 5, caractérisé en ce que le second interrupteur commandé (16) est en parallèle sur l'ensemble en série comprenant le rotor (1) et/ou le stator (2) et le premier interrupteur (10).

7. Circuit de protection selon l'une quelconque des revendications précédentes, caractérisé en ce que le fusible (12) est une piste d'un circuit imprimé (26).

8. Circuit de protection selon l'une quelconque des revendications précédentes, caractérisé en ce que le second interrupteur commandé (16) est dépourvu de radiateur de dissipation de chaleur.

9. Circuit de protection selon l'une quelconque des revendications précédentes, caractérisé en ce que le moyen de détection d'un court-circuit permanent du premier interrupteur (10) comporte un moyen (19) telle qu'une génératrice tachymétrique pour mesurer la vitesse réelle de rotation du moteur, un moyen pour comparer cette vitesse réelle à une vitesse de consigne, une détection de court-circuit correspondant à un écart entre vitesse réelle et vitesse de consigne dépassant une limite prédéterminée.

10. Circuit de protection selon l'une quelconque des revendications 1 à 8, caractérisé en ce que le moyen de détection d'un court-circuit permanent du premier interrupteur (10) comporte un moyen pour mesurer la tension efficace aux bornes de cet interrupteur, un court-circuit correspondant à une tension efficace nulle.

11. Application du circuit selon l'une quelconque des revendications précédentes à la protection d'un moteur universel à rotor (1) et stator (2) en série.

12. Application du circuit selon l'une quelconque des revendications 1 à 10 à la protection d'un moteur, notamment du type universel, d'entraînement du tambour d'un lave-linge.

## Claims

1. A protective circuit for an electric motor (1 and 2) in series with the circuit breaker (10) controlled by a phase angle control means, comprising a fuse (12) to cut off the supply to the motor in the event of a permanent short circuit of the controlled circuit breaker, and a second controlled circuit breaker (16), such as a triac or a thyristor, which is turned on when it has detected a permanent short circuit of the first circuit breaker (10) and is arranged in such a manner as to fuse the fuse in such case, characterized in that the circuit is so operated that the time between transfer into the conducting condition of the second controlled circuit breaker (16) and the instant of fusing of the fuse (12) is sufficiently large to ensure that a short tripping of the second controlled circuit breaker does not fuse the said fuse (12).

2. The protective circuit as claimed in claim 1 characterized in that the said time amounts to least 0.1 second and is for instance 0.2 second.

3. The protective circuit as claimed in claim 1 or claim 2 characterized in that the fuse (12) of the time lag type.

4. The protective circuit as claimed in any one of the claims 1 to 3 characterized in that the second controlled circuit breaker (16) is placed in parallel with the rotor (1) or the stator (2), the other winding being in series with this parallel-connected arrangement in order to limit the current flowing through the fuse (12).

5. The protective circuit as claimed in any one of the preceding claims characterized in that one resistor (25) with a negative temperature coefficient CTN is placed in series with the second controlled circuit breaker (16).

6. The protective circuit as claimed in any one of the claims 1 to 5 characterized in that the second controlled circuit breaker (16) is placed in parallel with the series-connected arrangement comprising the rotor (1) and/or the stator (2) and the first circuit breaker (10).

7. The protective circuit as claimed in any one of the preceding claims characterized in that the fuse (12) is a piece of wiring on a printed circuit board (26).

8. The protective circuit as claimed in any of the preceding claims characterized in that the second controlled circuit breaker (16) is free of any thermal dissipating radiating means.

9. The protective circuit as claimed in any one of the preceding claims characterized in that the means for detecting a permanent short circuit of the first circuit breaker (10) comprises means (19) such as a tachogenerator to measure the true speed of rotation of the motor, a means for comparing this true speed with a rated speed value, the detection of a short circuit corresponding to a difference between the true speed and the rated speed in excess of a predetermined limit.

10. The protective circuit as claimed in any one of the claims 1 to 8 characterized in that the means for detecting a permanent short circuit in the first circuit breaker (10) comprise a means to measure the voltage effective at the terminals of this circuit breaker, such a short circuit corresponding to an effective voltage of zero.

11. The application of the circuit as claimed in any one of the preceding claims for the protection of a universal motor with a rotor (1) and a stator (2) in series.

12. The application of the circuit as claimed in any one of the claims 1 to 10 for the protection of motor, more especially of the universal type, for the drive of the drum of a washing machine.

**Patentansprüche**

1. Schutzschaltung für einen Elektromotor (1, 2) in Reihenschaltung mit dem gesteuerten Unterbrecher (10) einer Phasenwinkel-Ansteuerung, mit : einer Sicherung (12), um die Stromversorgung des Motors im Falle eines andauernden Kurzschlusses des gesteuerten Unterbrechers zu unterbrechen, und einem zweiten gesteuerten Unterbrecher (16), wie einem Triac oder einem Thyristor, der, nachdem ein andauernder Kurzschluß des ersten Unterbrechers (10) festgestellt worden ist, leitend gemacht wird und der derart geschaltet ist, daß er in diesem Fall die Sicherung zerstört, dadurch gekennzeichnet, daß die Schaltung derart ausgelegt ist, daß die Zeit, die die Leitfähigkeit des zweiten gesteuerten Unterbrechers (16) von dem Zerstörungsmoment der Sicherung (12) trennt, ausreichend groß ist, um zu verhindern, daß kurze Auslösungen des zweiten gesteuerten Unterbrechers die genannte Sicherung (12) zerstören.

2. Schutzschaltung nach Anspruch 1, dadurch gekennzeichnet, daß die genannte Zeit wenigstens 0,1 Sekunde beträgt, z. B. in der Größenordnung von 0,2 Sekunde liegt.

3. Schutzschaltung nach Anspruch 1 oder 2, dadurch gekennzeichnet, daß die Sicherung (12) vom Typ mit langsamer Zerstörung ist.

4. Schutzschaltung nach einem der Ansprüche 1 bis 3, dadurch gekennzeichnet, daß der zweite gesteuerte Unterbrecher (16) mit dem Rotor (1) oder mit dem Stator (2) parallelgeschaltet ist, wobei die andere Wicklung in Reihenschaltung mit dieser Parallelgruppe liegt, um den die Sicherung (12) durchfließenden Strom zu begrenzen.

5. Schutzschaltung nach einem der vorstehenden Ansprüche, dadurch gekennzeichnet, daß ein NTC-Widerstand mit negativem Temperaturkoeffizient Reihenschaltung mit dem zweiten gesteuerten Unterbrecher (16) liegt.

6. Schutzschaltung nach einem der Ansprüche 1 bis 5, dadurch gekennzeichnet, daß der zweite gesteuerte Unterbrecher (16) zu der Reihenschaltungsgruppe parallel geschaltet ist, welche den Rotor (1) und/oder den Stator (2) und den ersten Unterbrecher (10) umfaßt.

7. Schutzschaltung nach einem der vorstehenden Ansprüche, dadurch gekennzeichnet, daß die Sicherung (12) eine Bahn einer gedruckten Schaltung (26) ist.

8. Schutzschaltung nach einem der vorstehenden Ansprüche, dadurch gekennzeichnet, daß der zweite gesteuerte Unterbrecher (16) kühlkörperlos ist.

9. Schutzschaltung nach einem der vorstehenden Ansprüche, dadurch gekennzeichnet, daß die Einrichtung zur Feststellung eines andauernden Kurzschlusses des ersten Unterbrechers (10) ein Mittel (19) wie einen Tachogenerator zur Messung der Istgeschwindigkeit der Motordrehung umfaßt, ein Mittel zum Vergleichen dieser Istgeschwindigkeit mit einer Sollgeschwindigkeit, wobei eine Kurzschlußfestellung einer eine vorbestimmte Grenze überschreitenden Abweichung zwischen der Istgeschwindigkeit und der Sollgeschwindigkeit entspricht.

10. Schutzschaltung nach einem der Ansprüche 1 bis 8, dadurch gekennzeichnet, daß die Einrichtung zur Feststellung eines andauernden Kurzschlusses des ersten Unterbrechers (10) ein Mittel zur Messung der Effektivspannung an den Klemmen dieses Unterbrechers umfaßt, wobei ein Kurzschluß einer verschwindenden Effektivspannung entspricht.

11. Anwendung der Schaltung nach einem der vorstehenden Ansprüche für den Schutz eines Universalmotors mit in Reihe geschaltetem Rotor (1) und Stator (2).

12. Anwendung der Schaltung nach einem der Ansprüche 1 bis 10 für den Schutz eines Motors, insbesondere des Universaltyps, für den Antrieb einer Waschmaschinentrommel.